# EUROPEAN PATENT APPLICATION

(11) **EP 3 434 989 A1**
(43) Date of publication of application: **30.01.2019**
(21) Application number: 17883037.8
(22) Date of filing: 11.04.2017
(51) Int. Cl.: F24F 7/007, F24F 7/00

(54) **BASE CHAMBER AND COVER WITH DIFFUSER FOR REPELLENT REFILL USE IN A FAN**

(30) Priority: 21.12.2016 BR 102016030146
(71) Applicant: MK Electrodomésticos Mondial S.A., 44245-000 Conceicao do Jacuipe - BA (BR)
(72) Inventor: KRAUSE, Jacques Ivo, 18103-085 Sorocaba - SP (BR)
(74) Representative: Juncosa Miró, Jaime
(86) International application number: PCT/BR2017/050084
(87) International publication number: WO 2018/112582

(57) **Abstract**

The present invention relates to a base chamber (1) closed by a cover (2) having a support (3) that receives a liquid-repellent refill (4) of any commercially available model, which separetes the chamber at the bottom (11) for accomodating the reservoir (4R) from the upper part (1S) for the wick (4P) which, duly heated by a PTC heating device (5), has the stream of air directed to the release windows (6) where negative pressure conveys the repellent towards the blades of the fan (7).

## Description

The present application for Patent of Invention relates to a base chamber incorporated into a fan that allows the use of any liquid repellent refill available on the market in a practical way, combining the comfort of a home fan with the protection of a mosquito-free environment in a single product easy to handle and use, where the vapor of the repellent is directed to the exhaust windows of the cover and thence to the blades.

With the increasing number of cases of diseases caused by mosquito solutions preventing their stings are most welcome. The use of different products simultaneously such as the fan and the electric insect repellent refill apparatus bring about some disturbances such as the need for two energy points and, mainly because the two products cannot be assembled together, the result is an inefficient distribution of the repellent which is concentrated in a short range of action, so that there is loss of efficiency and performance in both products.

The current state of the art anticipates some patent documents which combine the use of the fan with some type of insecticide, such as document MU 8101485-6 which basically reports the use of odorant and insecticide pads or elements to odorize or disperse an insecticide in the environment in a fan described in a generic manner whose element is located on the rear portion of the fan.

The use of repellent pads creates discomfort and work on the need for daily replacement. Another drawback to the use of pads is the need for hand contact with the repellent chemical substance, which can cause allergies, intoxications and other health problems.

PI0201058-5 relates to a fan intended to repel insects and odorize environments by way of pads and also containers for the insertion of odorizing or repellent liquids, using for such the heat of the motor itself. The document also details some specific mechanisms of action and dispersion of substances, the location of the repellent or odorizing pad on the rear portion of the fan, motor hood, and the location in the container pedestal for insertion of odorizing or repellent liquid.

The location of the heating insert on the rear portion of the fan has some drawbacks, such as making it difficult to handle when inserting or replacing the repellent, making it difficult to visualize the shelf-life of the pellet, and presenting losses by not using the entire ventilation flow to spread the generated repellent substance. The following can still be listed as disadvantages of this prior art:
✔ The possible use of a non-standard container for liquid repellents and possibly different from those used in the market, that is, the user cannot simply buy any liquid repellent refill and insert it into the product, thus resulting in limitations of use and allowing the risk of producing dirt and contact during handling that can cause health problems.
✔ The use of the very heat of the fan motor does not create the ideal temperature for the use of both pads and repellent liquids. The temperature in this configuration can vary greatly depending on the unique characteristics of each motor, the cooling generated by the airflow and the environment in which the product is used.
✔ The location of the container on the fan pedestal does not allow the entire temperature of the motor to be transferred to the repellent liquid, thus resulting in an ineffectiveness of its application in repelling the insects.
✔ The mechanism of action of the product with the pad on the rear portion of the fan exhibits loss by not using fully the ventilation flow to spread the generated repellent substance. The mechanism of action with the liquid container in the product pedestal also exhibits losses by allowing the inflow of a high air flow resulting in a greater dilution of the generated steam and consequently the loss of effectiveness of the product.

OM U8202433-2 basically relates to a fan intended to repel insects and odorize environments by means of repellent or odorizing pads very similar to the first mentioned above, but with the addition of a generic heating kit, an electric control mechanism and a steam steering mechanism which also allows for the handling (insertion and replacement) of the repellent or odorizing pad which is also located in the rear portion of the product.

In addition to the disadvantages inherent in the repellent insert and the location in the back, this prior art also presents as a limitation the container to house the insert which causes insertion and replacement of the insert.

Document M U 8700855-6 refers to a deodorizer and repellent fan which operates by way of an ozone generator located inside the pedestal which is provided with a specific electric control.

The disadvantage of the ozone generator is the high cost, complex assembly process, in addition to the fact that the technology does not have a proven efficiency to repel insects.

Document M U9000506-6 substantially describes a fan with a support on the front grid that features a heated repellent kit that makes use of pads. The document further mentions the electrical power of the repellent kit.

In addition to the disadvantages mentioned on the repellent pad, this prior art exhibits as a limitation the disassembly and assembly of the support for a somewhat complicated repellent kit for cleaning by the domestic users. The fit between the support and the front grid can generate an imperfect assembly between the pieces.

Aware of the state of the art, its gaps and limitations, the inventor, after observations, studies and research, created the **BASE CHAMBER AND COVER WITH DIFFUSER FOR REPELLENT REFILL USE IN A FAN** in question, which aims to offer a new insect repellent mechanism in a fan with easy acquisition, use and handling of any liquid repellent refill available on the market, based on a base chamber located at the front portion of the fan column, which optimizes the efficiency of the repellent refill. This chamber has a separate heating system to generate heat and maintains a stable temperature in the repellent refill to vaporize the substance contained therein. The shape of the chamber, associated with a hood-like constructional element, allows migration of the steam from the repellent liquid to the exhaust windows located on the cover, which optimally spreads it and distributes it in the environment compared to known apparatus. The chamber further creates a barrier that prevents the external airflow from diluting the steam of the repellent that becomes more concentrated toward the exhaust windows.

In short, the invention has the most preponderant advantages over known fan models:
✔ The combination of two products/applications (fan and repellent) in a single product/application in order to integrate, optimize and potentiate the action and efficiency of both;
✔ By using liquid repellent refill, it is possible to reduce the need for refill handling in comparison with daily pad replacement, and especially to eliminate manual contact with the repellent substance and consequently health problems;
✔ The location of the repellent refill mechanism - located on the front portion of the fan column - makes it much more practical for handling when inserting and replacing the liquid repellent refill, as well as for visualizing the remaining amount (shelf-life) of the substance inside the liquid repellent refill;
✔ The location of the repellent refill mechanism located at the front of the product column also improves the dispersion and virtually eliminates losses in the generated steam from the liquid repellent as the gas outlet is directed directly to the fan blade;
✔ The compatibility and consequently the use of any liquid repellent refill found on the market allows the user to choose and use their preferred repellent refill in a practical manner and without any limitation or risk due to the handling of the substance;
✔ The use of a heating system of its own and fastened next to the liquid repellent refill, which guarantees the ideal temperature for the repellent refills in a totally autonomous way independent of the operation or characteristic of the motor;
✔ The use of a chamber to house the liquid repellent refill system prevents too much air from flowing in, preventing the dilution of the steam generated by the repellent liquid and thereby increasing the efficiency of the product;
✔ The structure of the chamber design with the coupling piece next to the front cover makes insertion and replacement of liquid repellent refills much more practical;
✔ The use of liquid repellent refills available on the market guarantees the efficiency and safety approved by the responsible authorities;
✔ The base chamber for use of the liquid repellent refill is user-friendly and easy to handle, since the system has only one movable piece with guides for fastening in the correct position.

In order to better explain the innovation, the drawings which represent in an illustrative and non-limiting way are listed below.

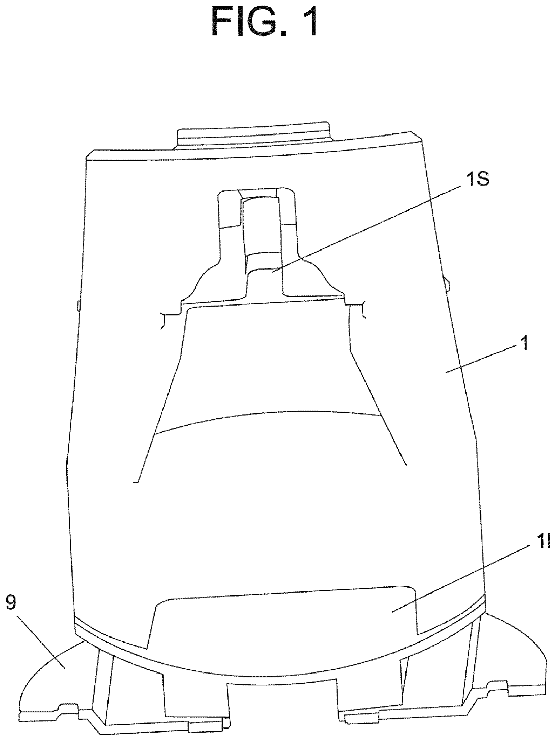

**Figure 1****:** Frontal view of the base chamber for use of the repellent refill in a fan;

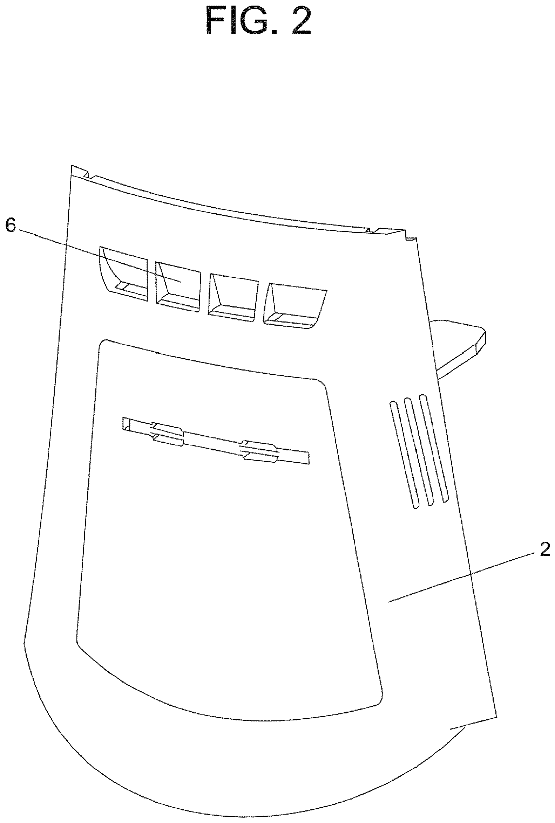

**Figure 2****:** Perspective view of the base chamber cover for use of repellent refill in a fan with a repellent refill;

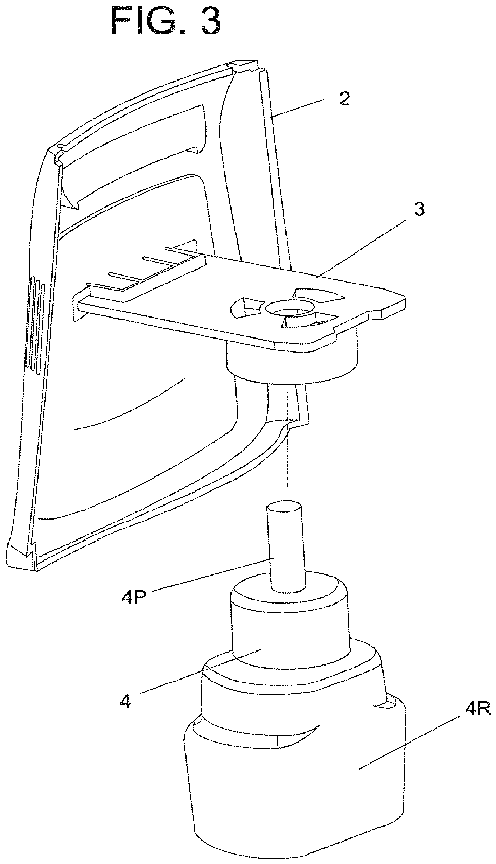

**Figure 3****:** Inverted perspective view of base chamber cover for use of repellent refill in a fan with refill;

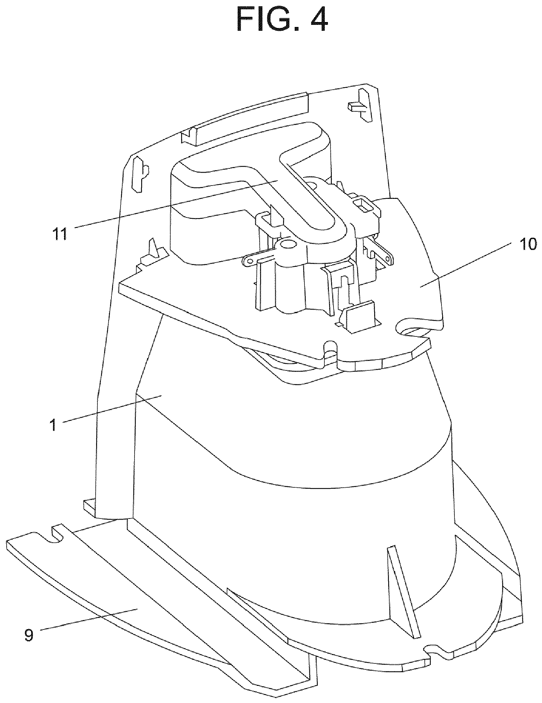

**Figure 4****:** Inverted perspective view of base chamber for use of repellent refill in a fan;

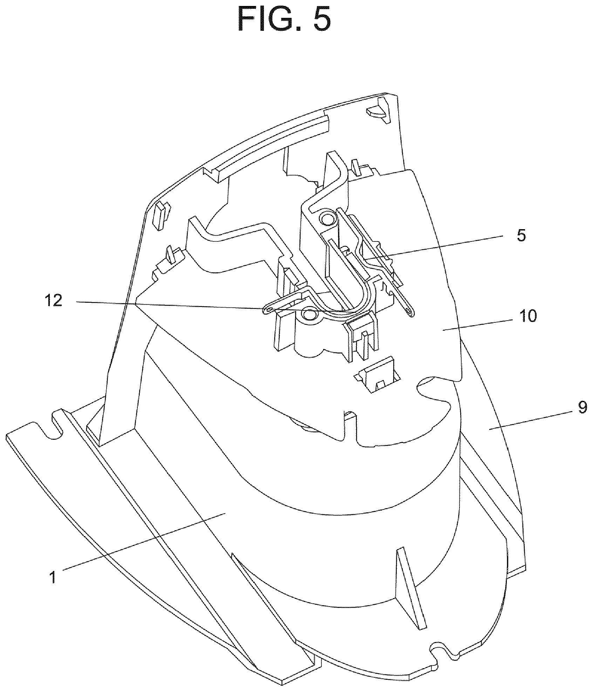

**Figure 5****:** Inverted perspective view of the base chamber for use of repellent refill in a fan detailing, at the top, the heating and dispersion system;

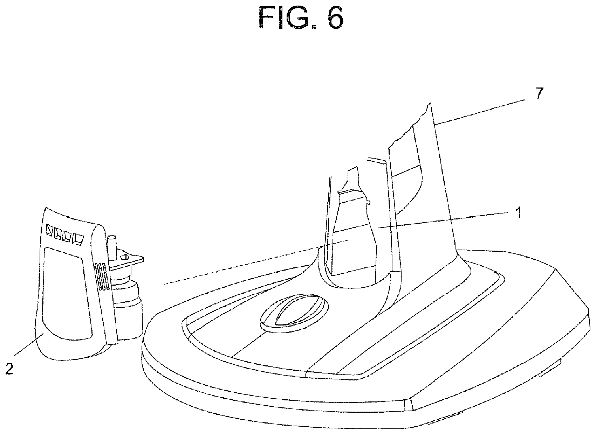

**Figure 6****:** Perspective view of base chamber for use of repellent refill in a fan mounted and ready for use in the product;

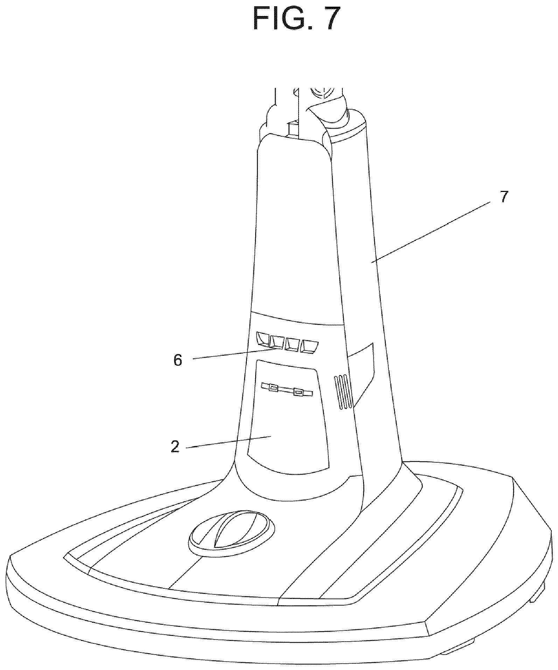

**Figure 7****:** Perspective view of the base chamber for use of repellent refill in a fan with cover mounted on the fan column;

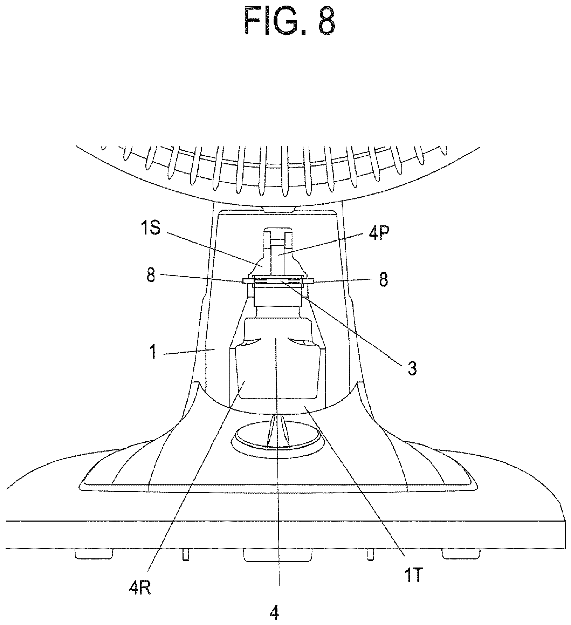

**Figure 8****:** Front view of base chamber for use of repellent refill in a fan, mounted with the refill, with the refill support and without the visualization display;

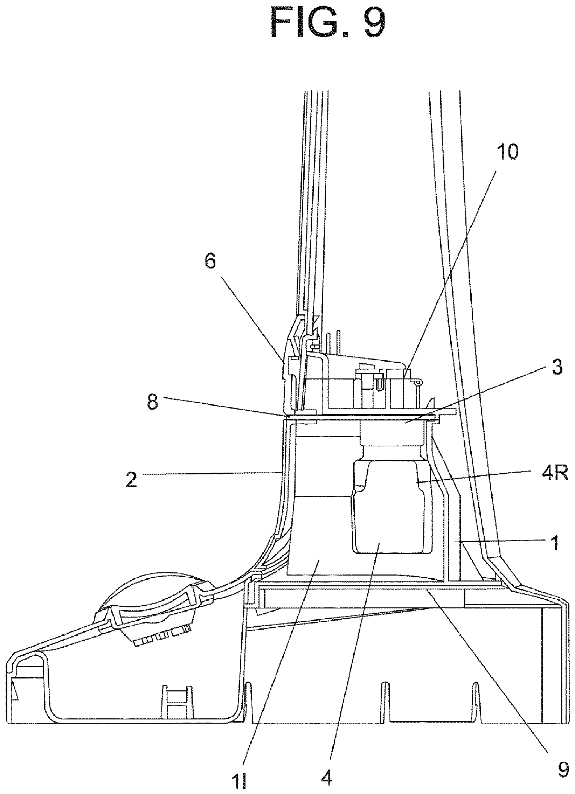

**Figure 9****:** Side cross-sectional view of base, column, and base chamber for use of ventilator-repellent refill, showed in use.

The **BASE CHAMBER AND COVER WITH DIFFUSER FOR REPELLENT REFILL USE IN A FAN** that motivates this patent of invention, refers to a base chamber (1) closed by a cover (2) having a support (3) which houses a liquid repellent refill (4) of any model available on the marker, which separates the chamber at the bottom (11) for accommodating the reservoir (4R) and upper part (1S) for the wick (4P), which is suitably heated by a PTC heating device (5) has the airflow directed towards the release windows (6) where negative pressure takes the repellent toward the blades of the fan (7).

More particularly, the base chamber (1) is located in the lower front portion of the fan column. The fastening of the chamber to the fan is made by way of plastic locks and screws. Access to the interior of the base chamber occurs by removing the cover (2) which is then reinserted for closing. This system facilitates the insertion and replacement process of the repellent refill, which is attached to a support (3) fixed in the said cover (2), which is fitted to the product inside the chamber (1) by way of steering guides (8). In this way, the chamber (1) houses the cover (2) with the support (3) together with the repellent refill (4).

The reservoir (4R) of the liquid repellent refill is housed at the bottom (11) of the chamber which is similar in shape to the repellent refills available on the market to be compatible with all models. In turn, the wick (4P) is housed in the upper part (1S) of the chamber. In this region, the U-shaped heating and dispersion system is also set to receive, house the wick (4P) and allow heat transfer as necessary. Once the repellent refill (4) is connected, the heating system generates the heat needed to vaporize the liquid of the repellent refill. Due to the location of the repellent refill (4), this vapor is directed to the release windows (6) of the cover (2). Due to the movement of the blade a negative pressure is created in front of the column. This pressure draws the steam evaporating from the refill (4) and directs it to the blades of the fan (7) which spreads it into the environment in a well-distributed, optimized and efficient manner. The base chamber (1) for use with liquid repellent refill (4) in a fan is closed to restrain excessive air inflow, thus avoiding the dilution of the repellent steam, allowing the repellent steam to flow out only through the release windows (6) located on the cover (2) of the chamber (1).

The base chamber (1) for use of the liquid repellent refill (4) in a fan (7) is located inside the front portion of the fan column and is constituted by the chamber (1) itself, the cover (2) with a support (3), heating and dispersion system and electric heating system. As already discussed the chamber (1) at the bottom (11) housing the reservoir (4R) of the liquid repellent refill, while the upper part (1S) houses the heating wick (4P) and also the heating and dispersion system (4A). Guides (8) directing and housing the support (3) of the repellent refill (4) project between the two housings. At the bottom (11) of the chamber there is a base (9) which is used for fastening to the column of the fan (7). The cover (2) of the chamber (1) is movable and has release windows (6) allowing the passage and directing the outflow of the steam evaporating from the repellent refill (4). The cover (2) further has an embedded support (3) of the refill (4), allowing its fitting and fastening. This support (3) also separates the upper part (1S) from the bottom (11) of the base chamber (1), thus restricting the steam evaporating from the refill (4) to the upper part (1S) only, and consequently due to the little space in said housing, directing the flow towards the release windows (6).

The heating and dispersion system comprises the heating base (10) housing the electrical system and the upper cover (11) of the chamber, which covers and protects the electrical system and closes the chamber. These two elements are U-shaped to receive the repellent refill from the front of the chamber and are also hood-shaped to direct the evaporating steam directly to the release windows (6). The heating system of the repellent refill (4) is constituted by a PTC heating device (5) suitably attached to a U-shaped metal plate (12) which provides heat for heating the wick (4P). The plate (12) is U-shaped to allow and facilitate the insertion and replacement of the liquid repellent refill (4). The electrical connection is performed by way of a terminal connected to one side of the PTC heating device (5), while the other is connected to the metal plate (12), thus allowing the passage of electric current between said plate (12) and the PTC heating device (5). This configuration avoids the use of a second terminal in the PTC heating device (5), prevents loss of heat and optimizes the space of the heating system. The product control has a key that switches on the heating system only if the fan (7) is also switched on to promote optimization and greater efficiency of the liquid repellent.

## Claims

1. **BASE CHAMBER AND COVER WITH DIFFUSER FOR REPELLENT REFILL USE IN A FAN,** wherein it is localized in the lower front portion of the column of the fan (7), access inside the base chamber (1) is done by removing the cover (2); the repellent refill is fastened to a support (3) fastened to the cover (2) which is engaged with the product inside the chamber (1) by way of steering guides (8); the support (3) is together with repellent refill (4); the support divides the chamber (1) into the bottom (11) where the reservoir (4R) of the repellent refill is located, and upper part (1S), the U-shaped heating and dispersion system being also fastened to this region to receive, house the wick (4P) and enable heat transfer when needed; due to the location of the repellent refill (4), the generated steam is directed to the release windows (6) of the cover (2); the electrical connection is made by way of a terminal connected to one side of the PTC heating device (5) and the other connected to the metal plate (12), thus allowing the passage of electric current between said plate (12) and the PTC heating device (5); the plate (12) is U-shaped to permit and facilitate the insertion and replacement of the liquid repellent refill (4).
